# EUROPEAN PATENT APPLICATION

(11) **EP 1 375 913 A1**
(43) Date of publication of application: **02.01.2004**
(21) Application number: 03076857.6
(22) Date of filing: 16.06.2003
(51) Int. Cl.: F03D 9/00, F03D 11/00

(54) **Wind turbine with discoid generator**

(30) Priority: 28.06.2002 IT MI20021439
(71) Applicant: High Technology Investments B.V., 2451 VW Leimuiden (NL)
(72) Inventor: Casazza, Matteo, 39049 Vipiteno (Bolzano) (IT)
(74) Representative: Coppo, Alessandro

(57) **Abstract**

A wind generator unit with high energy yield, comprising an air-motor or air-generator, capable of transforming the kinetic energy of the wind into electrical energy, wherein the electrical generator (22) of the air-motor is directly and closely connected with the rotor (18) of the air-motor, so as to obtain a higher overall yield with respect to conventional units; moreover, the air-motor, particularly suitable for mountainous installations and extremely windy areas, is able to capture a high amount of wind energy in a determined time period, being further equipped with anti-ice and anti-lightning systems.

## Description

The present invention refers to a wind generator unit with high energy yield.

More specifically, the invention concerns a unit comprising a wind or air-motor generator having an extremely high ratio between the power given and the weight of its structure, also suitable for being installed in open windy areas.

Amongst "clean" alternative energy sources, in other words with a low or no environmental impact, wind has particular importance, especially in areas with a high probability of consistent wind throughout the year. Amongst these areas, mountainous areas are of particular interest, like vast areas of the Italian and Iberian Peninsula.

Regarding this, there are different technical solutions relative to machines which transform the kinetic energy of the wind into electrical energy. Such machines, usually known as wind generators (air-generators) or air-motors, usually have a high ratio between its own weight and the electrical energy produced. Moreover, they are substantially difficult to assemble, given their structure, which comprises, as well as the actual machine itself, the support tower on which the machine itself is arranged to fully carry out its function.

These conditions substantially limit the power of machines of this type that can be installed in areas that are mountainous and in extreme conditions, but of interest for their wind characteristics.

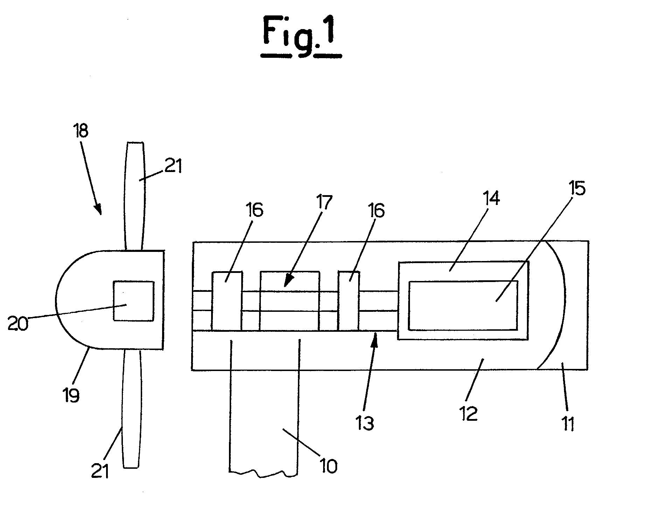

In order to better highlight the technical drawbacks of the prior art, it is suitable to synthetically analyse the configuration of an air-motor constructed according to the current state of the art, the tentative outline of which is shown in figure 1.

In the figure, in which the air-motor is illustrated schematically in an exploded view, there is no indication of the wind sensors, the blade-orientating actuators, the azimuth rotation members of the nacelle with respect to the support tower and the electronic control and power apparatuses, such as the inverters, used, in particular, to manipulate the parameters of the energy produced by the generator to adapt them to those of the mains network where such energy is to be received.

The air-motor of figure 1 comprises a support tower 10 for a pod 11, which defines a nacelle 12, which, in turn, contains an inner frame 13 for containing an electrical generator 14, complete with a respective rotor 15, which is connected, through suitable connection joints 16, to a step-up gearing 17.

The pod 11 is in direct contact, through the hub 20, with the rotor part 18, which comprises a propeller 19 and a series of blades 21.

As can clearly be seen in figure 1, conventional air-motors have total physical separation between the rotor 18 and the generator 14. Moreover, the step-up gearing 17 is inserted between them, which increases the number of revolutions of the rotor 18, substantially linked to the strength of the wind, to adapt it to that which is necessary for classic operation of the electrical generator 14.

Further technological drawbacks still present in current wind-powered machines are linked to the negative consequences deriving from use of the air-motor in mountainous/hilly locations, which constitute areas with highly favourable atmospheric conditions for gaining electrical energy, fully respecting ecological requirements.

The most evident problems encountered in conventional air-generators used in such types of installations are mainly due to:
- difficulties in accessing mountainous/hilly locations to transport and install heavy and complex machines with quite delicate mechanisms;
- characteristics of the wind, which blows according to frequently variable strengths, with gusts and turbulence which translate into aerodynamic stresses on the structures of the air-motors;
- adverse atmospheric conditions, which are manifested in abundant formations of ice, following high atmospheric humidity and a fall in temperature, and lightning strikes in stormy weather.

Precisely for these reasons, currently air-generator groups mounted in mountainous locations are limited to a power of 600 W, to contain the aforementioned difficulties within acceptable limits.

Moreover, due to the blowing of the wind in gusts, turbulence and rapid variations in direction, two types of problems emerge, one deriving from the variability of the dynamic stresses of the structure, to which forces are applied which change in intensity, direction and points of application in bursts; the other type of problem emerges in relation to the absorbency requirements of the structure following strong traction/absorbency and torsion stresses, which must be apportioned in various members and discharged in others without damage and without sparking dangerous characteristics of persistent vibration. Finally, as far as adverse atmospheric conditions are concerned, it should be kept in mind that wind generator units are all the more valid the more they manage to provide, for the same amount of power, a large amount of energy in a predetermined time period (for example, in 1 year).

This also depends upon the availability of the unit, or else being able to reduce the idle time of the machine due to various difficulties, such as the deposit of ice on the blades or the occurrence of damage from lightning strikes, to the minimum.

In the aforementioned requirements, the purpose of the present invention is, therefore, that of realising a wind generator unit with high energy yield, which is particularly suitable for exploiting the wind energy of mountainous/hilly locations, so as to provide a greater amount of energy, in a given period of time and with the same power, with respect to conventional apparatuses.

Another purpose of the invention is to realise a wind generator unit with high energy yield, which includes an air-motor which is particularly light with respect to the power that it can develop.

A further purpose of the invention is that of realising a wind generator unit with high energy yield, which is able to absorb strong traction/compression and torsion stresses and/or dangerous characteristics of persistent vibration and which allows the idle time of the machine caused by malfunction and various difficulties, due, in particular, to adverse weather conditions, to be reduced to the minimum or even be eliminated.

The last but not least purpose of the present invention is that of realising a wind generator unit with high energy yield, which is extremely functional and reliable, for whatever application requirement, as well as simple to install, with respect to conventional units.

These and other purposes, according to the invention, are accomplished by realising a wind generator unit with high energy yield according to claim 1, to which we refer for the sake of brevity.

Advantageously, the wind generator unit according to the invention allows the exploitation of an air-generator or air-motor group, which can be installed in mountainous locations (having particularly good atmospheric conditions for obtaining electrical energy, in accordance with ecological requirements), having an extremely light structure with respect to the power developed (which reaches 1200 W, in other words about double the power that can currently be delivered by known air-generator groups).

In order to obtain such a structure a machine with a reduced number of components is proposed, with respect to conventional solutions (for example, with the elimination of revolution multiplier members), which are extremely integrated with each other from the mechanical point of view.

This drastic reduction in mechanical members is compensated by the relative sophistication of the electronic part, both in terms of power (with greater processing of the electrical energy) and control (to harmonise the adjustment process to the time constants deriving from the lower mechanical inertias).

The different mechanical configuration of the air-generator also requires special aerodynamic research, in order to limit the intensity of the frequencies of oscillation of the structure and to thus avoid the triggering of dangerous characteristics of persistent vibration.

These problems are, indeed, solved through an accurate air-elasticity study of the structure, using computer simulations with programs based upon models which reproduce the characteristics of the structure under examination. Such software programs are realised especially for the particular application and are suitable for defining an optimal distribution of the stresses on the various parts of the structure, sharing them out proportionally to safely withstand them.

These software programs also allow intervention on the adjustment system, so as to control the transient phenomena in a suitable way, for example quickly intervening on the orientation of the rotor blades when there is a sudden gust of wind, so as to greatly limit the stresses both on the rotor and on all of the members positioned downstream.

More generally, if an energy peak is transmitted from the wind to the air-generator and an efficient adjustment of the transition takes care of quickly gearing all of the system's parameters, such a peak can flow along the chain of members of the unit, up to the mains distribution network, without momentary accumulations of energy being created in some of them, subjecting them to abnormal stresses.

The characteristics and advantages of a wind generator unit with high energy yield, according to the present invention, shall become clearer from the following description, relative to a non-limiting example embodiment, referring to the attached schematic drawings, in which:
- figure 1 shows a schematic view of a wind generator or air-motor, realised according to the prior art;
- figure 2 is a partial schematic side view of an air-motor used in a wind generator unit with high energy yield, according to the present invention;
- figure 3 illustrates an enlarged detail of figure 2, showing the channels of an anti-ice system realised through circulation of hot air inside the blades of the air-motor, according to the present invention.

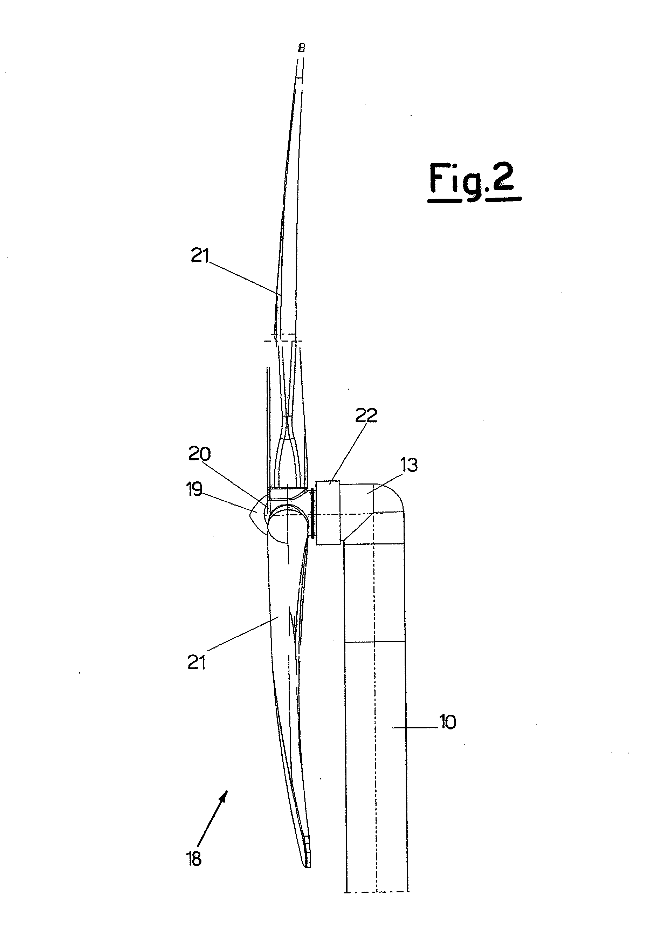

With particular reference to figure 2, in which the elements of the air-motor (or air-generator) having an analogous function to those represented in figure 1 are indicated with the same reference numerals, it should be noted that the air-motor proposed according to the invention substantially differs from those structured according to the prior art, above all in that the electrical generator, indicated with 22 in the figures, unlike the generator 14 of conventional structures, is directly and closely connected with the rotor 18, with the step-up gearing 17 with the relative joints 16 having been eliminated in the new configuration.

To obtain this fundamental result, which allows the electrical generator 22 to be in direct engagement with the rotor 18 of the blades 21, the same generator 22 is structured in a completely original manner and somewhat differently to a conventional generator 14.

The generator 22, above all, has truly particular dimensions, being flat (very thin in the length direction) and very wide along the diameter. More specifically, according to preferred non-limiting example embodiments of the invention, a synchronous, multipole and multiphase generator 22 with permanent magnets is used, in direct engagement (as a double axial magnetic gap), without any excitation circuit and without sliding contacts, which operates with a very low number of revolutions.

The electrical generator 22 is also mechanically integrated in the bearer structure and the polar wheel, which constitutes the generator's rotor, is flanged to the hub 20, whereas the stator is flanged to the frame 13, so that the nacelle 12 is made up of only three elements and, in particular, of the hub 20, the generator 22 and the frame 13.

The new solution thus gives the maximum reduction in weight, components and actuation systems, since the step-up gearing 17 and further hydraulic units, transmission shafts and joints are eliminated from the structure. This configuration of the air-generator also allows the structure of the support tower 10, which normally is large in size and substantially heavy in the context of the entire unit, to be made significantly lighter.

Moreover, the air-generator according to the invention has a higher overall yield, with respect to conventional structures, since it combines in a determining way the absence of the step-up gearing 17 and the elimination of the excitation circuit of the electrical generator 22.

In such a case, according to the embodiment, it is possible to ease its transportation and installation even in extreme conditions.

Finally, the described air-generator has a high availability for capturing the maximum amount of wind energy in a determined period of time (for example, 1 year), a characteristic that is very important for the economic result of the use of the unit. The end result is, therefore, the realisation of an air-generator with a high ratio between the energy produced in the time period and the weight of the machine. All of this is also thanks to control of the power through variable pitch of the blades 21, of the electrical type and autonomous for each blade 21, and with orientation to the wind through electrically commanded azimuth control. The rotation speed is also variable, with a defined range thereof.

As already mentioned previously, the described air-generator is particularly suitable for mountainous installations, being equipped with anti-ice and anti-lightning systems. Regarding this, the anti-ice system designed for the air-generator used in the wind generator unit according to the present invention has the purpose of reducing its periods of inactivity in the winter months, due to the formation of ice on the blades, increasing the availability of the machine. The formation of ice, indeed, causes unbalancing of the aerodynamic forces (the ice causes changes in the geometry of the finned profiles) and centrifugal forces (non-uniform formation of ice) acting on the rotor 18 and the consequent increase in the level of oscillations of the entire structure determines the stopping of the generator.

Usually, therefore, the machine must be kept idle until thawing and, in particularly hostile environments, the reduction in availability in terms of hours/year is extremely disadvantageous.

The proposed anti-ice system, according to the invention, is based upon the blowing of hot air inside the blades 21, in which the heating of the air is carried out by exploiting the heat energy freed by the inverter, a percentage of the heat energy freed by the generator 22 and the energy freed by two groups of electrical resistances positioned inside the pod 11.

The forced circulation is also obtained by using the same fans of the air conditioning system installed at the base of the tower 10 or suitably positioned additional fans and by exploiting the stack effect of the exoskeleton structure.

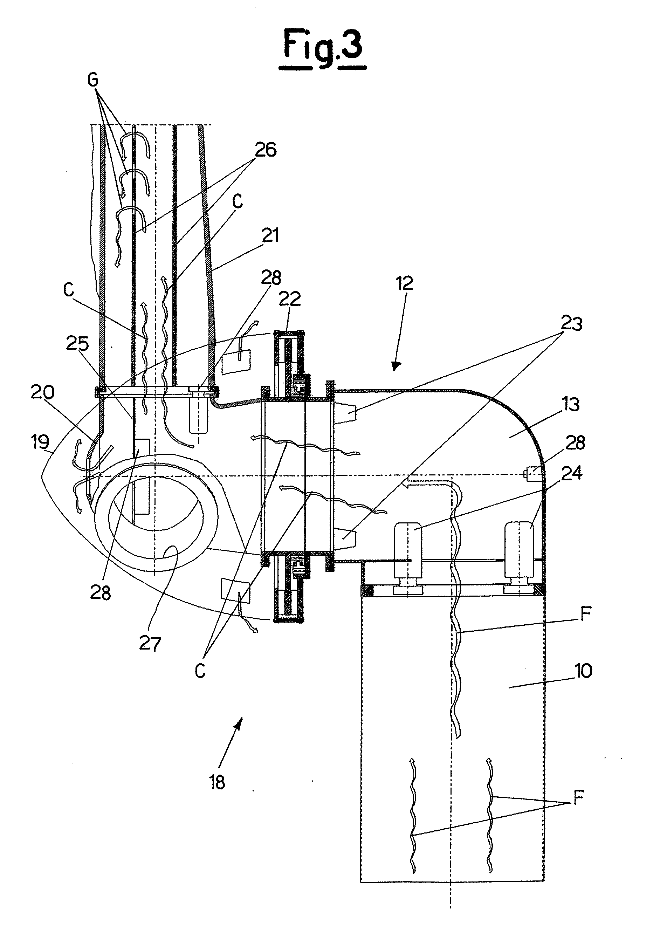

To describe the operation of the anti-ice system according to the invention more fully, reference is made, in particular, to figure 3.

The air is taken in from the outside by suitable slits equipped with filters arranged at the base of the tower 10 and pushed upwards by suitable fans, flowing around the housings of the inverters (not shown in the figures), in order to recover the heat losses.

Entering into the pod 11, beyond the orientation mechanism to the wind 24, the flow of cold air F coming from the base of the tower 10 meets resistance exchangers 23, which constitute the main heating, and further exchangers inside the generator 22, so that the system can also be used to cool down the generator 22, in the summer, when it operates at full power.

The flow of hot air C thus generated is directed towards the blades 21 and a diaphragm 25 present in the hub 20 conveys the air to the inside of the blades 21, where, through a system of canal diaphragms 26 and openings, the flow C is forced to lick the inner surface of the entire blade 21 in a differentiated manner, according to the distribution taken to be the most probable for the formation of ice on the outer wall.

It is also possible to use a series of vortex generators suitably positioned on the inner surface of the blades to increase the heat exchange coefficient inside the blade 21.

The air then flows towards the hub 20, according to the paths G, and is expelled through a hole 27 made in the front portion of the hub 20.

An additional option is the realisation of outflow holes in suitable spacers arranged between the hub 20 and each blade 21.

In such a way the heating system used foresees sending air into the typically hollow structure of the blade 21 carrying out circulation thereof inside of it, even with the circuit closed. The air is in practice heated through a heat exchange process where the air itself absorbs the heat power dissipated by the electrical machines and apparatuses and generated by the electrical resistances present in the structure.

The flow of air, with the circuit open, is taken in from the outside and taken to lick the hot parts, whereas, in the case of closed circuits, such a flow is cyclically taken, along its path inside the blade, into contact with a hot source which thermally regenerates it.

Finally, it should be noted that, in the case in which the air-generator is idle, the heating is used to detach the layer of ice from the surface of the blades 21, then exploiting the force of gravity to eliminate it from the machine, whereas, when the air-generator is in motion, the formation of ice is previously avoided by the activation of the system.

As stated, the heating is due in part to dissipated heat losses and in part to the electrical resistances 23 suitably positioned in the pod 11 or directly in the hub 20, near to the anchoring of the blades 21, whereas the forced circulation is obtained through a fan foreseen in the tower and is promoted by the stack effect given by the hollow structure.

All of this is obtained through studies of yield and of aspects of energy, as well as evaluations of the maximum heat exchange with the use of conventional blades and development of blades made from special materials or with special geometries to promote the circulation of air and the heat exchange localised in the area of the attachment edge of the blades.

It is also foreseen to research the most appropriate technique for heating the generator after prolonged periods of inactivity and to allow a gradual cooling thereof after intense use, as well as the maintenance of the optimal climatic conditions for the operation of the blade pitch (elements generically indicated with 28 in figure 3) and of all of the sensor equipment installed.

The system is integrated in that for air conditioning and anti-ice and once again exploits the hollow stack structure of the entire air-generator.

As far as the possibility of reducing the damage due to lightning bolts to the minimum and thus of increasing the availability of the wind generator unit according to the invention is concerned, the exoskeleton structure of the described air-motor eases the task, exploiting, in particular, the Faraday effect. Finally, for the purpose of protecting the active parts of the electrical generator and the turning parts from discharges, it is possible to use a receiving structure (for classic peak theory) and to position the bearings far from the path of the lightning.

From the description which has been made the characteristics of the wind generator unit with high energy yield, object of the present invention, are clear, just as the advantages are also clear.

Finally, it is clear that numerous variants can be brought to the wind generator unit in question, without for this reason departing from the novelty characteristics inherent to the inventive idea, just as it is clear that, in the practical embodiment of the invention, the materials, the shapes and the sizes of the illustrated details can be whatever according to the requirements and they can be replaced with others which are technically equivalent.

## Claims

1. Wind generator unit with high energy yield, particularly suitable for mountainous/hilly installations and/or extremely windy areas, comprising at least one air-motor or air-generator, capable of transforming the kinetic energy of the wind into electrical energy, said air-motor foreseeing at least one nacelle (12) for containing at least one electrical generator (14) and a rotor part (18) equipped with a series of blades (21), **characterised in that** said electrical generator (22) is directly and closely connected with said rotor portion (18) of the air-motor, so as to obtain a higher overall yield with respect to conventional units.

2. Wind generator unit according to claim 1, **characterised in that** said electrical generator (22) is arranged in direct engagement with the rotor (18) of said blades (21), said generator (22) being structured according to a flat and diametrically wide surface.

3. Wind generator unit according to claim 1, **characterised in that** said generator (22) is of the synchronous, multipole and multiphase type with permanent magnets, and does not have any excitation circuit and/or sliding contacts.

4. Wind generator unit according to claim 1, **characterised in that** the generator (22) is mechanically integrated in the bearer structure of the air-motor and has a rotor connected to a hub (20) of said rotor part (18) and a stator fixed to a frame (13) for containing said nacelle (12), which is made up of said hub (20), the generator (22) and the frame (13).

5. Wind generator unit according to claim 1, **characterised in that** said unit foresees a system suitable for countering the formation of ice on said blades (21) of the air-motor, said system comprising means suitable for conveying air into the blades (21).

6. Wind generator unit according to claim 5, **characterised in that** the air entered into the blades (21) is previously heated exploiting the heat energy dissipated by electrical machines and/or apparatuses present inside said air-motor.

7. Wind generator unit according to claim 6, **characterised in that** the heat energy used to heat the air is supplied by the generator (22) and/or by groups of electrical resistances (23) positioned inside the air-motor.

8. Wind generator unit according to claim 7, **characterised in that** the air is conveyed into said blades (21) through forced circulation means and exploiting the stack effect of the support tower (10) of said air-motor, said amount of air being taken in from the outside by suitable slits and being pushed upwards by fan means.

9. Wind generator unit according to claim 8, **characterised in that** a flow of hot air (C) generated by the passage of cold air (F) on said electrical apparatuses and/or machines and/or electrical resistances (23) is conveyed towards the blades (21), through channel means (25, 26) which send said hot flow (C) to lick the inner surfaces of each blade (21) in a differentiated manner, according to the distribution taken to be the most probable for the formation of ice on the outer wall of said blade (21).

10. Wind generator unit according to claim 9, **characterised in that** said channel means (25, 26) comprise a series of vortex generators to increase the heat exchange coefficient inside each blade (21).

11. Wind generator unit according to claim 9, **characterised in that** said flow of hot air (C) channelled inside the blades (21) flows towards said hub (20) of the rotor structure (18), according to determined paths (G) and is expelled to the outside through at least one opening (27) made in the hub (20), so that a circulation of hot air (C) is carried out inside the structure of each blade (21), said flow of air (C) being heated thanks to a heat exchange process where the air absorbs the heat power dissipated by said electrical machines and apparatuses and generated by said electrical resistances (23) present in the air-motor.

12. Wind generator unit according to claim 1, **characterised in that** it foresees means of protection from bolts of lightning and/or other harmful weather conditions.
